# EUROPEAN PATENT SPECIFICATION

(11) **EP 1 018 412 B1**
(45) Date of publication and mention of the grant of the patent: **03.11.2004**
(21) Application number: 99302357.1
(22) Date of filing: 26.03.1999
(51) Int. Cl.: B26F 1/40, B26D 5/00, B26D 7/18, B26D 7/24, B65H 29/62, B65H 29/04

(54) **Flat board stamping apparatus**
Vorrichtung zum Stanzen von flächigen Platten
Dispositif d'estampage de plaques planes

(30) Priority: 07.01.1999 JP 181399
(43) Date of publication of application: 12.07.2000
(73) Proprietor: ASAHI MACHINERY LIMITED, Takaishi-shi, Osaka 592 (JP)
(72) Inventor: Suzuki, Yoshio, Takaishi-shi, Osaka (JP)
(74) Representative: Hillier, Peter

(56) References cited:
- US-A- 3 786 976
- US-A- 4 026 199
- US-A- 5 115 144
- PATENT ABSTRACTS OF JAPAN vol. 016, no. 416 (M-1304), 2 September 1992 (1992-09-02) -& JP 04 141400 A (TOPPAN PRINTING CO LTD;OTHERS: 01), 14 May 1992 (1992-05-14)

## Description

### BACKGROUND OF THE INVENTION

### Field of the Invention

The present invention relates to a flat board stamping apparatus for stamping a flat material such as a sheet of corrugated board, cardboard and film, according to the preamble of claim 1. An example of such an apparatus is given in the document JP-04-141400-A.

### Description of the Prior Art

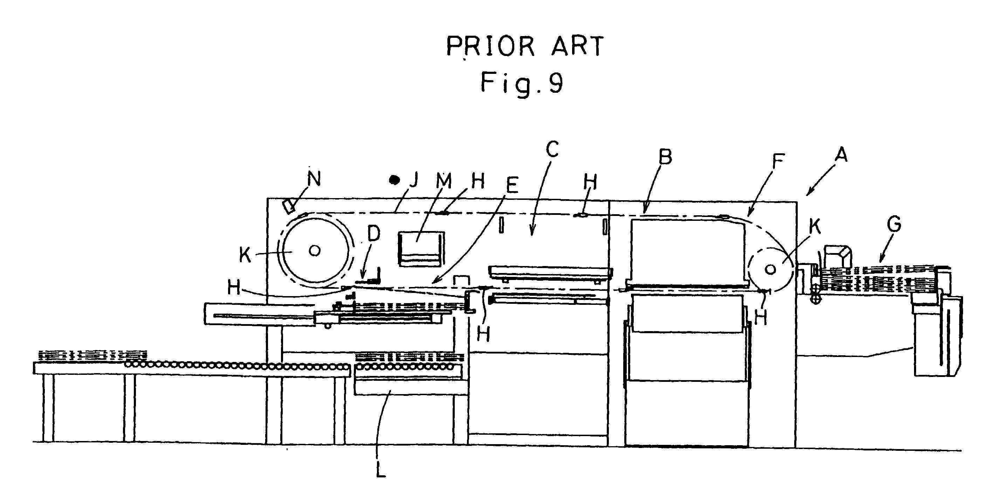

A flat board stamping apparatus A is generally known which is structured such that after a specified pattern is stamped on a material to be stamped such as a sheet of corrugated board, a product part of the material is knocked off. Typically, the flat board stamping apparatus includes, as shown in FIG. 9, a stamping portion B for stamping a specified pattern on the material to be stamped; a stripping portion C for stripping off a non-product part from the stamped material, leaving the product part and gripper margin in place; a knock-off portion D for knocking off the product part from the gripper margin; a delivery portion E for accommodating therein the product part knocked off by the knock-off portion D; and a transferring means F for transferring the material stamped in sequence to the stamping portion B, the stripping portion C and the delivery portion E.

In this type of flat board stamping apparatus A, printed materials to be stamped, such as printed sheets of corrugated board, which are set in a piled relation in a feeder portion G, are transferred one by one from the feeder portion G to the transferring means F and then are transferred in sequence to the stamping portion B, the stripping portion C and the delivery portion E via the transferring means F.

The transferring means F includes an endless chain belt J having holding portions H, spaced apart, for holding the gripper margin of the stamped material. The chain belt J is looped over a rotating wheel K which is intermittently driven for rotation in association with a stamping mechanism of the stamping portion B and is thus driven for rotation to allow the holding portions H to pass through the stamping portion B, the stripping portion C and the delivery portion E in sequence.

The stamping portion B, the stripping portion C and the delivery portion E are spaced at a uniform interval so that when the chain belt J of the transferring means F is intermittently driven for rotation, the materials to be stamped held by the holding portions H can be stopped coincidentally at positions corresponding to the stamping portion B, the stripping portion C and the delivery portion E.

In the stamping portion B for stamping a specified pattern on the material to be stamped, the pattern is stamped on the material to be stamped in such a manner that the product part and the gripper margin can be separated from the non-product part.

In the stripping portion C, only the non-product part is stripped away from the stamped material, leaving the product part and gripper margin in place.

In the delivery portion E, the knock-off portion D by which the product part is knocked off from the gripper margin is arranged in a vertically movable relation at a location inside of the chain belt J of the transferring means F and near the outlet of the delivery portion E. The knock-off portion D is controlled for rotation so that it can be lowered when the stamped material comes to a stop at a fixed position. The product part knocked off by the knock-off portion D is accommodated into the delivery portion E.

The product part accommodated in the delivery portion E is moved to a vertically movable delivery table L.

Only the gripper margin held by the holding portions H of the chain belt J is left in the material from which the product part is knocked off by the knock-off portion D. The gripper margin is withdrawn in a gripper margin withdrawing portion M.

Incidentally, the materials to be stamped as printed, such as sheets of corrugated board as printed, are set in place in the feeder portion G in a piled relation. However, there may be cases where a printed surface of a material to be stamped as set is sometimes oriented in a wrong direction or set inadequately so that it is not coincident with the stamping pattern of the stamping portion B.

In addition, there may be cases where a material to be stamped which fails in print or is in a different state is sometimes mixed in the materials to be stamped as piled.

When the material to be stamped of such inadequacy is stamped, a defective material is produced. The defective material must then be wed out.

In the known board stamping apparatus, a detecting mark printed in the gripper margin held by the holding portions H is detected by a detecting means N of a camera immediately after the stamped material passes past the delivery portion E, in order to detect the defective material, as shown in FIG. 9.

In this arrangement, since the detecting mark printed in the gripper margin is detected by the camera after the defective material is accommodated in the delivery portion E, even when the defective material is detected, only the fact of the defective material being accommodated in the delivery portion can present. Because of this, a manual work is required of the defective material being wed out from the products accommodated in the delivery portion E. As a result of this, the products must manually be checked one by one to find defectives, thus requiring a troublesome labor and taking much time for that. In addition, there may be cases when the defective material is sometimes overlooked in the manual work.

### SUMMARY OF THE INVENTION

In consideration of the disadvantages involved in the prior art mentioned above, the present invention has been made. It is the object of the present invention to provide a flat board stamping apparatus capable of withdrawing the defective material automatically and reliably.

The present invention provides a novel flat board stamping apparatus comprising a stamping portion for stamping a specified pattern on a material to be stamped; a stripping portion for stripping away a non-product part from the stamped material, leaving a product part and a gripper margin in place; a non-defective material knocking off portion for knocking off the product part from the gripper margin; a delivery portion for accommodating therein the product part knocked off by the non-defective material knocking off portion; and a transferring means for transferring the material stamped in sequence to the stamping portion, the stripping portion and the delivery portion, wherein a detecting means for detecting a state of the material stamped is arranged at a location upstream from the delivery portion, and a control unit is arranged for determining defective condition or non-defective condition of the material stamped with reference to detected results of the detecting means and controlling the non-defective material knocking off portion of the delivery portion so that when the material stamped is recognized as defective condition, the non-defective material knocking off portion cannot be put in action.

In the flat board stamping apparatus of the present invention, a defective material withdrawing portion for withdrawing the defective stamped material passing through the delivery portion is arranged in a transferring path of the transferring means and is provided with a defective material knocking off portion for knocking off the product part of the defective material from the gripper margin and withdrawing the knocked off product part, and also the control unit controls the defective material knocking portion so that when the material stamped is recognized as the defective condition with reference to the detected results of the detecting means, the defective material knocking off portion can be put in action to withdraw in the defective material withdrawing portion the product part of the defective stamped material passing through the delivery portion.

Further, in the flat board stamping apparatus according to the present invention, the delivery portion is provided with a temporarily receiving portion by which the material stamped recognized as the defective condition and passing through the delivery portion is received at a rear end thereof in the transferring direction.

### BRIEF DESCRIPTION OF THE DRAWINGS

FIG. 1 is a schematic sectional view of an entire structure of a flat board stamping apparatus of one embodiment of the present invention;
FIG. 2 is an illustration showing a transferring state of a stamped material in a delivery portion of the flat board stamping apparatus of the present invention;
FIG. 3 is an illustration showing a state of a product part of the stamped material being knocked off in the delivery portion of the board stamping apparatus of the present invention;
FIG. 4 is a sectional view of a detecting means as viewed from a lateral side of the flat board stamping apparatus of the present invention;
FIG. 5 is a sectional view of the detecting means as viewed from a front side of the flat board stamping apparatus of the present invention;
FIG. 6 is an illustration showing a transferring state of a defective stamped material in the delivery portion of the flat board stamping apparatus of the present invention, showing the state of a defective material being supported at the rear end in the transferring direction thereof by a temporarily receiving portion;
FIG. 7 is an illustration showing a transferring state of a stamped material in the delivery portion of the flat board stamping apparatus of the present invention, showing a state of a defective material being transferred to a defective material withdrawing portion;
FIG. 8 is a block diagram of a control unit of the flat board stamping apparatus of the present invention; and
FIG. 9 is a schematic sectional view of a conventional type of flat board stamping apparatus.

### DETAILED DESCRIPTION OF THE PREFERRED EMBODIMENT

Referring now to the accompanying drawings, an example of the preferred embodiment of the present invention directed to a flat board stamping apparatus will be described below. It is to be understood, however, that the scope of the invention is limited by the claims.

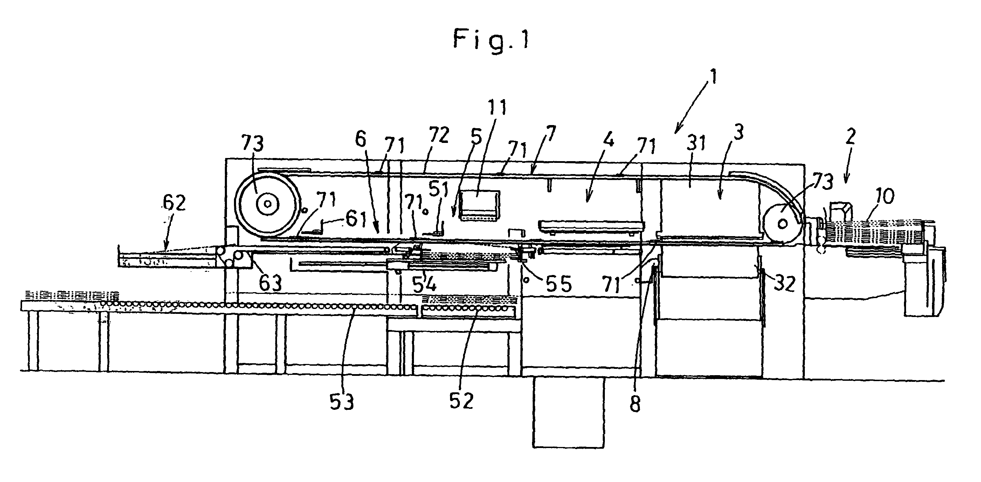

A flat board stamping apparatus 1 of an embodiment of the present invention comprises, as shown in FIG. 1, a feeder portion 2 in which printed materials to be stamped 10, such as printed sheets of corrugated board, are set in place in a piled relation; a stamping portion 3 for stamping a specified pattern on the materials to be stamped 10; a stripping portion 4 for stripping away a non-product part from the stamped material 10, leaving a product part and a gripper margin in place; a non-defective material knocking off portion 51 for knocking off the product part from the gripper margin; a delivery portion 5 for accommodating therein the product part knocked off by the non-defective material knocking off portion 51; a defective material withdrawing portion 6 for withdrawing the stamped material 10 having some defective condition (defective material 10); and a transferring means 7 for transferring the stamped material 10 in sequence to the stamping portion 3, the stripping portion 4, the delivery portion 5 and the defective material withdrawing portion 6.

The transferring means 7 includes an endless roller chain 72 having holding portions 71, spaced apart, for holding the gripper margin of the material stamped 10. The roller chain 72 is looped over a rotating wheel 73 which is intermittently driven for rotation in association with a stamping mechanism of the stamping portion 3.

The transferring means 7 is constructed such that when the materials to be stamped 10 piled in the feeder portion 2 are drawn out one by one, the endless roller chain 72 is intermittently driven for rotation, holding the gripper margin of the material 10 by the holding portions 71, while passing through the stamping portion 3, the stripping portion 4, the delivery portion 5 and the defective material withdrawing portion 6 in sequence.

The stamping portion 3, the stripping portion 4, the delivery portion 5 and the defective material withdrawing portion 6 are spaced in order at a uniform interval. Also, the holding portions 71 are spaced at a uniform interval in the roller chain 72 so that when the roller chain 72 of the transferring means 7 is intermittently driven for rotation, the materials stamped 10 held by the holding portions 71 can be stopped coincidentally at positions corresponding to the stamping portion 3, the stripping portion 4, the delivery portion 5 and the defective material withdrawing portion 6.

The stamping portion 3 for stamping a specified pattern on the material to be stamped 10 is located at the discharge side of the feeder portion 2. The stamping portion 3 comprises a stationary plate 31 and a presser plate 32 vertically movable relative to the stationary plate 31. The stationary plate 31 and the presser plate 32 are located over and under the material to be stamped 10 so as to sandwich the material 10 therebetween.

In the stamping portion 3, the pattern is stamped on the material to be stamped 10 in such a manner that the product part and the gripper margin can be separated from the non-product part.

In the stripping portion 4 which is located downstream from the stripping portion 3, only the non-product part is stripped away from the stamped material 10, leaving the product part and gripper margin in place.

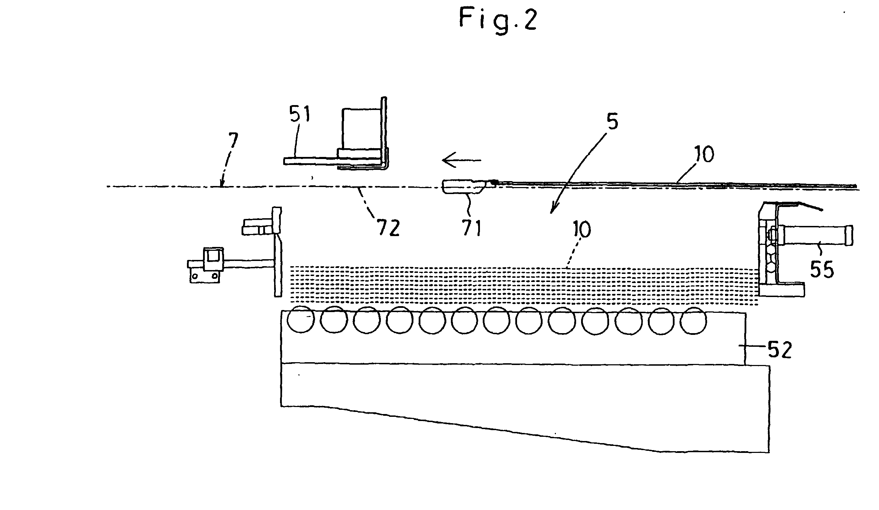

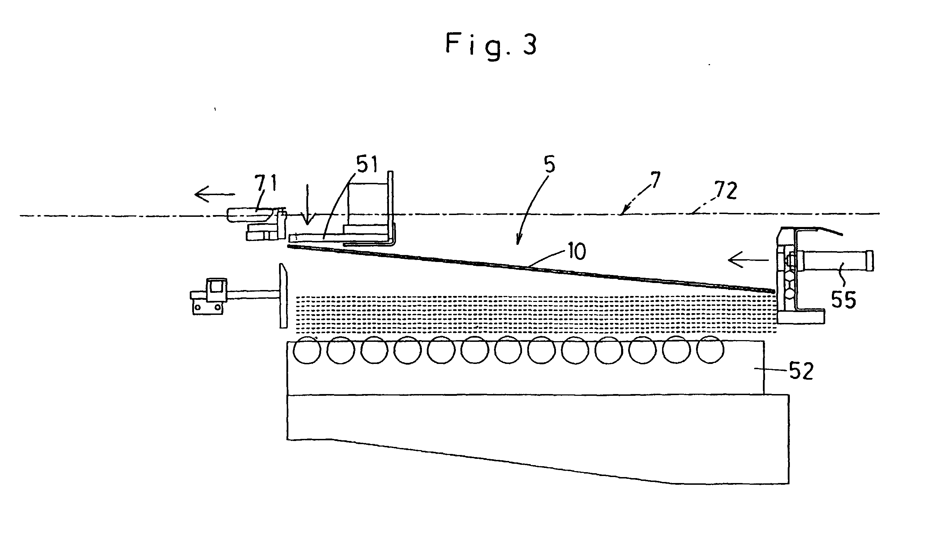

In the delivery portion 5 located downstream from the stripping portion 4, the non-defective material knocking off portion 51 for knocking off the product part from the gripper margin is arranged in a vertically movable relation at a location inside of the roller chain 72 of the transferring means 7 and near the outlet of the delivery portion 5, as shown in FIGS. 2 and 3.

The non-defective material knocking off portion 51 is controllably driven to be lowered when the stamped material 10 is transferred to the delivery portion 5 as shown in FIG. 2 and is brought to a stop at the fixed position in the delivery portion 5 as shown in FIG. 3. The product part knocked off by the non-defective material knocking off portion 51 is accommodated in the delivery portion 5.

Further, the delivery portion 5 is provided with a delivery table 52 for receiving the product part therein. The delivery table 52 is so structured as to move up and down between its upper position at which the product part knocked off by the non-defective material knocking off portion 51 is received by it and its lower position at which the product parts piled thereon are moved to a transferring conveyer 53.

Also, the delivery portion 5 is provided with an unloading portion 54 movable back and forth, so that when the delivery table 52 is in the lower position, the unloading portion 54 is moved into the delivery portion 5 to receive the product part by it.

Further, a space is defined at a location upstream from the delivery portion 5 and between the stamping portion 3 and the stripping portion 4, in between which the detecting means 8 is arranged for detecting the state of the stamped material 10.

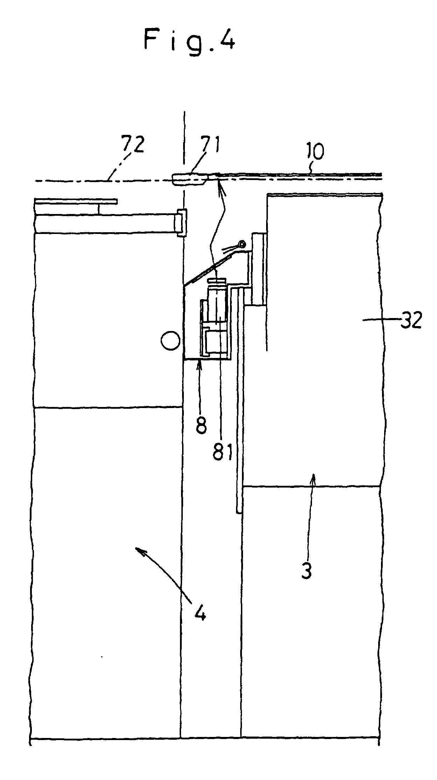

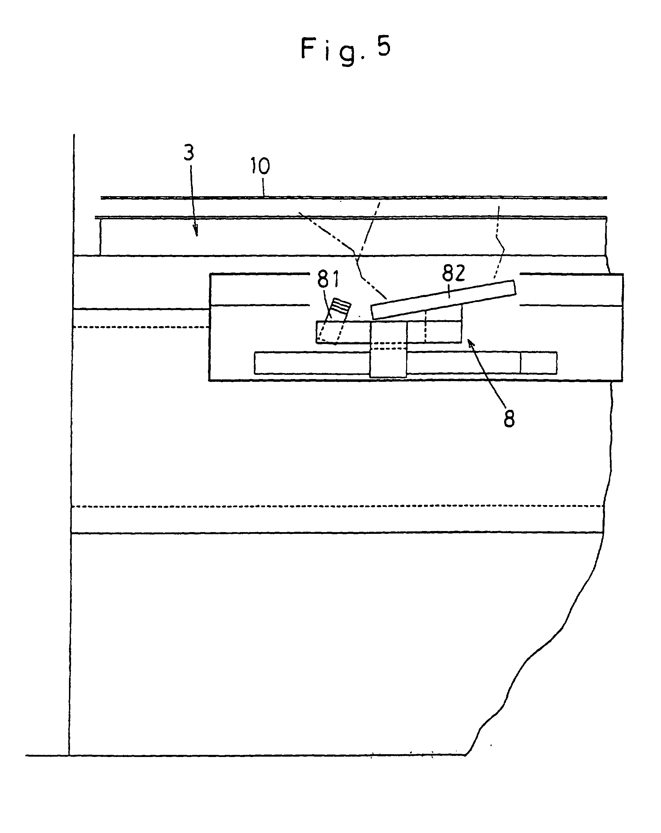

The detecting means 8 has a CCD camera 81 and an illuminating portion 82 for illuminating the stamped material 10, as shown in FIGS. 4 and 5. The CCD camera 81 and the illuminating portion 82 are arranged to move in reciprocation in a widthwise direction with respect to the transferring direction of the stamped material.

The detecting means 8 is adapted to detect a detecting marker printed in a printed surface of the stamped material 10 at a gripper margin thereof. The detecting marker is detected by the camera 81 to see if it is located in place.

Alternatively, two cameras may be used setting at both widthwise ends with respect to the transferring direction, without limiting to the arrangement of the illustrated embodiment using only one camera. In this arrangement, the stamped material 10 can be detected more precisely to see if it is out of position.

The camera(s) may be arranged downstream from the stripping portion 4 or between the stripping portion 4 and the delivery portion 5. This arrangement provides the result of enabling a final form of the stamped material 10 to be detected. So, if modification is then made such that the entire width of the stamped material 10 can be detected by use of, for example, a line camera for scanning linearly in the material along the widthwise direction, that can make it possible to detect the entire printed surface of the stamped material 10, to provide a further reliable detection of defectives.

Further, the camera(s) may be arranged between the feeder portion 2 and the stamping portion 3.

Furthermore, the detecting means which may be used include any other sensors such as a photosensor, without limiting to the CCD camera, as long as it has capabilities of detecting the printed surface of the stamped material.

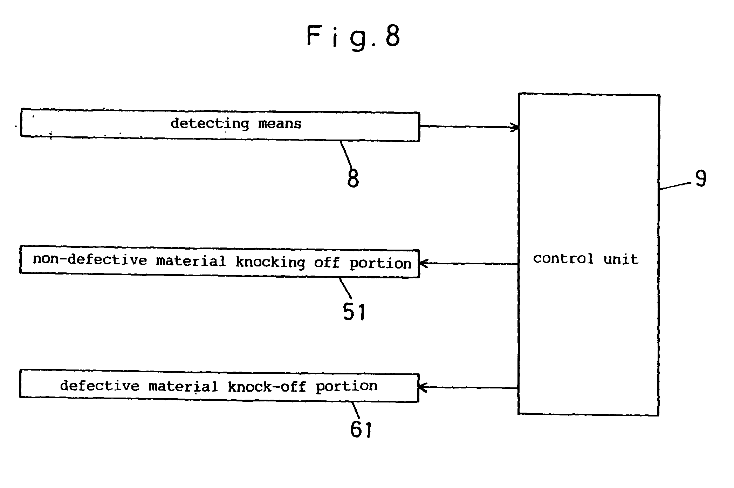

The detected results obtained by the detecting means 8 is fed to the control unit 9 in the flat board stamping apparatus 1, as shown in FIG. 8.

In the control unit 9, defective condition (or non-defective condition) of the stamped material 10 is determined with reference to the detected results of the detecting means 8. The control unit 9 controls the non-defective material knocking off portion 51 of the delivery portion 5 so that when the stamped material 10 is recognized as non-defective condition (or good condition), the non-defective material knocking off portion 51 is put in action, while on the other hand, when the stamped material 10 is recognized as defective condition, the non-defective material knocking off portion 51 is not put in action.

It is noted here that as to determination of defective condition of the stamped material, the stamped material 10 is recognized as defective condition (or defective material) when the detecting marker is not detected at a specified position by the camera 81 of the detecting means 8. When the detecting marker is not detected at the specified position, there are possibilities that the printed surface of the material stamped 10 may be oriented in the opposite direction; that the print may be failed; and that the as-set material stamped 10 may be out of position. These cases are all recognized as defective condition.

The defective material withdrawing portion 6 is arranged at a location downstream from the delivery portion 5. When the stamped material 10 is recognized as defective condition and the non-defective material knocking off portion 51 of the delivery portion 5 is controlled not to be put in action by the control unit 9, the defective material 10 is fed to and withdrawn by the defective material withdrawing portion 6.

The defective material withdrawing portion 6 is provided with a defective material knock-off portion 61 for knocking off the defective material from the gripper margin and withdrawing it.

The defective material knock-off portion 61 is put in action by the control unit 9 only when the stamped material 10 is recognized as the defective material by the control unit 9 with reference to the detected results of the detecting means 8. When the defective material knock-off portion 61 is put in action, the product part of the defective material 10 passing through the delivery portion 5 is withdrawn into the defective material withdrawing portion 6.

Further, the defective material withdrawing portion 6 is provided with a discharging conveyer 63 via which the withdrawn product part is discharged in order into a defective material stock portion 62 located downstream of the defective material withdrawing portion 6.

The delivery portion 5 is provided with a temporarily receiving portion 55 by which the stamped material 10 recognized as defective condition and passing through the delivery portion 5 is received at a rear end thereof in the transferring direction.

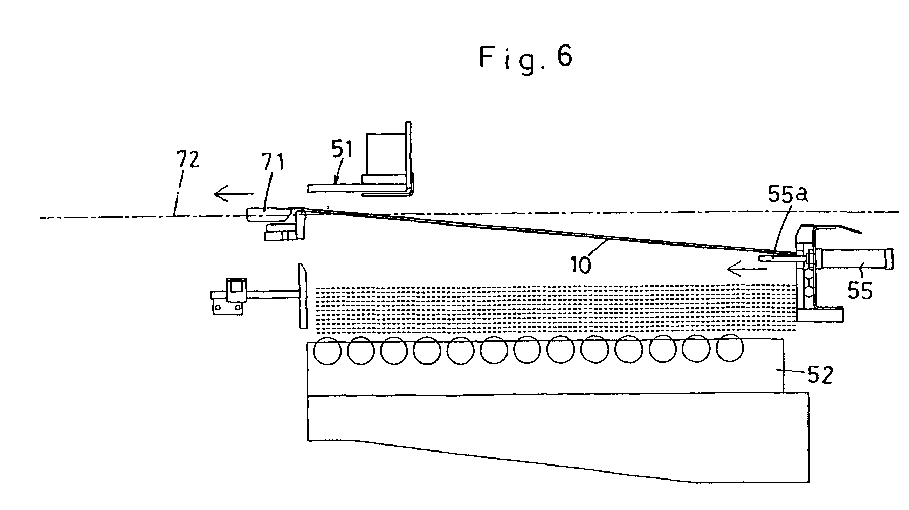

The temporarily receiving portion 55 is disposed above the discharging table 52 and is composed of an air cylinder having a piston 55a projecting into and retracting from the accommodating room of the delivery portion 5, as shown in FIG. 6. When the non-defective material is accommodated in the delivery portion 5, the piston 55a of the temporarily receiving portion 55 is in the retracted state. When the stamped material 10 is recognized as defective condition in the control unit 9, the piston 55a begins moving forward or projecting in association with the feeding of the defective stamped material 10 to the delivery portion 5. When the roller chain 72 comes to a stop, the defective stamped material 10 is received at a rear end thereof in the transferring direction by the projected piston 55a.

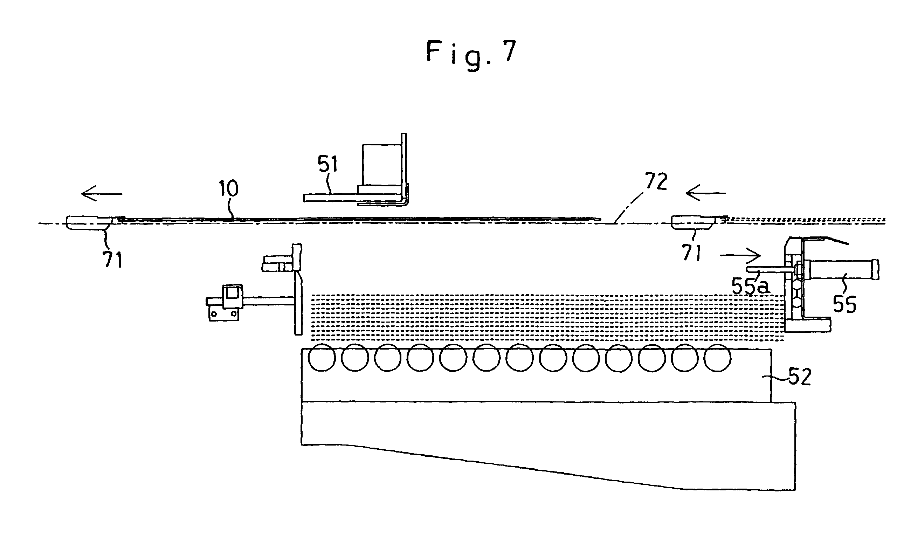

Further, when the roller chain 72 restarts, the piston 55a is retracted, as shown in FIG. 7. The temporarily receiving portion 55 thus constructed can allow the defective stamped material 10 to be transferred to the defective material withdrawing portion 6, without bending and falling down to the delivery portion 5, even if the roller chain 72 comes to a stop, so that the defective stamped material 10 is brought to a standstill in the delivery portion.

It is noted that the temporarily receiving portion may be so modified as to catch the stamped material 10 at both widthwise ends thereof, instead of at the rear end thereof.

After the product part is knocked off from the stamped material by the non-defective material knocking off portion 51 or by the defective material knock-off portion 61, the remaining part (the gripper margin) is withdrawn in a gripper margin withdrawing portion 11 located above the delivery portion 5.

According to the embodiment of the present invention thus constructed, the materials to be stamped 10, such as printed sheets of corrugated board, as are set in the piled relation in the feeder portion 2 are transferred from the feeder portion 2 to the transferring means 7 one by one and then are transferred in sequence to the stamping portion 3, the stripping portion 4 and the delivery portion 5 via the transferring means 7, in the condition of the holding part (gripper margin) of the material being held by the holding portions 71 of the transferring means 7.

In the transference, timely detection of the detecting marker printed in the gripper margin of the stamped material 10 is made by the detecting means 8.

The detected results obtained by the detecting means 8 are forwarded to the control unit 9 in which defective condition (or non-defective condition) of the stamped material 10 is determined with reference to the detected results of the detecting means 8. When the stamped material 10 is recognized as non-defective condition by the control unit 9, the non-defective material knocking off portion 51 of the delivery portion 5 is put in action, so that the product part of the stamped material 10 is accommodated in the delivery part 5. At that time, the defective material knocking off portion 61 is controlled not to be actuated.

On the other hand, when the stamped material 10 is recognized as defective condition by the control unit 9, the non-defective material knocking off portion 51 of the delivery portion 5 is not put in action, so that the defective material 10 is transferred to the defective material withdrawing portion 6, passing through the delivery portion 5. Then, the defective material knocking off portion 61 is put in action, so that the product part of the defective material is reliably accommodated in the defective material withdrawing portion 6.

It is further noted that the control unit 9 may include additional controllability as to keeping count of the defective stamped materials 10 and recording the time of cause of defective condition. This can provide the advantage of enabling the cause of defective condition to be checked at a later time.

According to the present invention, the detecting means for detecting the state of the material stamped is arranged at a location upstream from the delivery portion and also the control unit is arranged for determining defective condition or non-defective condition of the material stamped 10 with reference to the detected results of the detecting means and controlling the non-defective material knocking off portion of the delivery portion so that when the material stamped is recognized as defective condition, the non-defective material knocking off portion cannot be put in action. This construction can produce the advantage that defectives can automatically be sorted out of the stamped materials to minimize the troublesome labor and thus the time for drawing out the defectives as involved in the prior art.

Also, according to the present invention, the defective material withdrawing portion for withdrawing the defective stamped material passing through the delivery portion is arranged in the transferring path of the transferring means and is provided with the defective material knocking off portion for knocking off the product part of the defective material from the gripper margin and withdrawing the as-cut product part, and also the control unit controls the defective material knocking off portion of the delivery portion so that when the material stamped is recognized as defective condition with reference to the detected results of the detecting means, the defective material knocking off portion can be put in action to withdraw in the defective material withdrawing portion the product part of the defective stamped material passing through the delivery portion. This construction can produce the advantage that only the defectives can be withdrawn automatically.

Further, the delivery portion is provided with the temporarily receiving portion by which the material stamped recognized as defective condition and passing through the delivery portion is received at a rear end thereof in the transferring direction. This arrangement can produce the advantage that even if the transferring means comes to a stop and thus the defective stamped material is brought to a standstill in the delivery portion, the defective stamped material can be transferred to the defective material withdrawing portion, without bending and falling down to the delivery portion.

## Claims

1. A flat board stamping apparatus (1) comprising a stamping portion (3) for stamping a specified pattern on a material to be stamped; a stripping portion (4) for stripping away a non-product part from the stamped material (10), leaving a product part and a gripper margin in place; a non-defective material knocking off portion (51) for knocking off the product part from the gripper margin; a delivery portion (5) for accommodating therein the product part knocked off by the non-defective material knocking off portion (51); and a transferring means (7) for transferring the material stamped (10) in sequence to the stamping portion (3), the stripping portion (4) and the delivery portion (5), **characterized in that** a detecting means (8) for detecting a state of the material stamped (10) is arranged at a location upstream from the delivery portion (5) and that a control unit (9) is arranged for determining defective condition or non-defective condition of the material stamped (10) with reference to detected results of the detecting means (8) and controlling the non-defective material knocking off portion (51) of the delivery portion (5) so that when the material stamped (10) is recognized as defective condition, the non-defective material knocking off portion (51) cannot be put in action.

2. A flat board stamping apparatus according to Claim 1, wherein a defective material withdrawing portion (6) for withdrawing the defective stamped material passing through the delivery portion (5) is arranged in a transferring path of the transferring means and is provided with a defective material knocking off portion (61) for knocking off the product part of the defective material from the gripper margin and withdrawing the knocked off product part, and wherein the control unit (9) controls the defective material knocking off portion (61) so that when the material stamped (10) is recognized as the defective condition with reference to the detected results of the detecting means (8), the defective material knocking off portion (61) can be put in action to withdraw in the defective material withdrawing portion (6) the product part of the defective stamped material passing through the delivery portion (5).

3. A flat board stamping apparatus according to Claim 1 or 2, wherein the delivery portions (5) is provided with a temporarily receiving portion (55) by which the material stamped recognized as the defective condition and passing through the delivery portion (5) is received at a rear end thereof in the transferring direction.

## Patentansprüche

1. Vorrichtung (1) zum Stanzen von flächigen Platten mit einem Stanzbereich (3) zum Stanzen eines festgelegten Musters in ein zu stanzendes Material, einem Ablösebereich (4) zum Ablösen eines Nicht-Produkt-Teils vom gestanzten Material (10), wobei ein Produkt-Teil und ein Greifrand belassen wird, einem Abschlagbereich (51) für nicht fehlerhaftes Material zum Abschlagen des Produktteils vom Greifrand, einem Lieferbereich (5), in dem der von dem Abschlagbereich (51) für nicht fehlerhaftes Material abgeschlagene Produktteil gesammelt wird, und einem Transportmittel (7) zum Transportieren des gestanzten Materials (10) der Reihe nach zum Stanzbereich (3), zum Ablösebereich (4) und zum Lieferbereich (5),
**dadurch gekennzeichnet, dass** ein Erkennungsmittel (8) zum Erkennen eines Zustandes des gestanzten Materials (10) an einer dem Lieferbereich (5) vorgeschalteten Position vorgesehen ist, und dass eine Steuereinheit (9) vorgesehen ist zur Feststellung von fehlerhaftem oder nicht fehlerhaftem Zustand des gestanzten Materials (10) mit Bezug auf die erkannten Ergebnisse des Erkennungsmittels (8) und zum Steuern der Abschlageinrichtung (51) für nicht fehlerhaftes Material des Lieferbereichs (5), so dass die Abschlageinrichtung (51) für nicht fehlerhaftes Material nicht in Betrieb gesetzt werden kann, wenn der Zustand des gestanzten Materials als fehlerhaft erkannt wird.

2. Vorrichtung zum Stanzen von flächigen Platten nach Anspruch 1,
wobei ein Ausscheidebereich (6) für fehlerhaftes Material zum Ausscheiden des fehlerhaft gestanzten Materials, welches den Lieferbereich (5) durchläuft, in einem Transportweg des Transportmittels vorgesehen und mit einem Abschlagbereich (61) für fehlerhaftes Material zum Abschlagen des Produktteils des fehlerhaften Materials vom Greifrand und zum Ausscheiden des abgeschlagenen Produktteils versehen ist, und wobei die Steuereinheit (9) den Abschlagbereich (61) für fehlerhaftes Material so steuert, dass, wenn der Zustand des gestanzten Materials mit Bezug auf die erkannten Ergebnisse des Erkennungsmittels (8) als fehlerhaft erkannt ist, der Abschlagbereich (61) für fehlerhaftes Material in Betrieb genommen werden kann, um den Produktteil des fehlerhaft gestanzten Materials, welches durch den Lieferbereich (5) durchgereicht wurde, im Ausscheidebereich (6) für fehlerhaftes Material auszuscheiden.

3. Vorrichtung zum Stanzen von flächigen Platten nach Anspruch 1 oder 2,
wobei der Lieferbereich (5) mit einem Bereich (55) zur zeitweisen Aufnahme versehen ist, von dem das gestanzte Material, dessen Zustand als fehlerhaft erkannt wurde und das durch den Lieferbereich (5) durchgereicht wurde, an dessen in Transportrichtung hinterem Ende aufgenommen wird.

## Revendications

1. Dispositif d'estampage de plaques planes (1) comprenant une partie d'estampage (3) pour estamper un motif spécifié sur un matériau devant être estampé, une partie de pelage (4) pour peler une partie de non produit à partir du matériau estampé (10) laissant une partie de produit et une marge de saisie en place, une partie d'éjection de matériau non défectueux (51) pour éjecter la partie de produit de la marge de saisie, une partie de délivrance (5) pour y loger la partie de produit éjectée par la partie d'éjection de matériau non défectueux (51), et un moyen de transfert (7) pour transférer le matériau estampé (10) en séquence vers la partie d'estampage (3), la partie de pelage (4) et la partie de délivrance (5), **caractérisé en ce qu'**un moyen de détection (8) d'un état du matériau estampé (10) est placé en amont de la partie de délivrance (5) et **en ce qu'**une unité de commande (9) est prévue pour déterminer une condition de défaut ou de non-défaut du matériau estampé (10) en référence aux résultats fournis par le moyen de détection (8) et commandant la partie d'éjection de matériau non défectueux (51) de la partie de délivrance (5) de telle façon que, lorsque le matériau estampé (10) est reconnu comme étant défectueux, la partie d'éjection de matériau non défectueux (51) ne peut pas être actionnée.

2. Dispositif d'estampage de plaques planes selon la revendication 1, dans lequel une partie d'extraction de matériau défectueux (6) pour extraire le matériau estampé défectueux traversant la partie de délivrance (5) est prévue dans un trajet de transfert du moyen de transfert et est munie d'une partie d'éjection de matériau défectueux (61) pour éjecter la partie de produit du matériau défectueux de la marge de saisie et pour extraire la partie de produit éjectée, et dans lequel l'unité de commande (9) commande la partie d'éjection de matériau défectueux (61) de telle façon que, lorsque le matériau estampé (10) est reconnu comme étant défectueux en référence aux résultats fournis par le moyen de détection (8), la partie d'éjection de matériau défectueux (61) peut être actionnée pour extraire dans la partie d'extraction de matériau défectueux la partie de produit du matériau estampé défectueux traversant la partie de délivrance (5).

3. Dispositif d'estampage de plaques planes selon la revendication 1 ou 2, dans lequel la partie de délivrance (5) est munie d'une partie de réception temporaire (55) selon laquelle le matériau estampé reconnu comme étant défectueux et traversant la partie de délivrance (5) est reçu à son extrémité arrière dans la direction de transfert.
